(19) Europäisches Patentamt
European Patent Office
Office européen des brevets

(11) Publication number : **0 484 018 A2**

(12) **EUROPEAN PATENT APPLICATION**

(21) Application number : **91309646.7**

(22) Date of filing : **18.10.91**

(51) Int. Cl.$^5$ : **C09B 47/20,** G11B 7/24

(30) Priority : **02.11.90 GB 9023893**

(43) Date of publication of application : **06.05.92 Bulletin 92/19**

(84) Designated Contracting States : **BE CH DE ES FR GB IT LI NL SE**

(71) Applicant : **IMPERIAL CHEMICAL INDUSTRIES PLC**
**Imperial Chemical House, Millbank**
**London SW1P 3JF (GB)**

(72) Inventor : **Thetford, Dean**
**1 Bradshaw Avenue**
**Failsworth, Manchester M35 0JY (GB)**

(74) Representative : **Pugsley, Roger Graham et al**
**IMPERIAL CHEMICAL INDUSTRIES PLC Legal Department: Patents PO Box 6 Bessemer Road**
**Welwyn Garden City Herts, AL7 1HD (GB)**

(54) **Phthalocyanine compounds useful as an infrared absorber.**

(57) A phthalocyanine compound of the Formula (1) :

$$M_k\ Pc\ (O\text{-}R)_a\ (S\text{-}R^1)_b\ X_d \quad \text{Formula (1)}$$

wherein :

$M_kPc$ is a phthalocyanine nucleus of the Formula (2) :

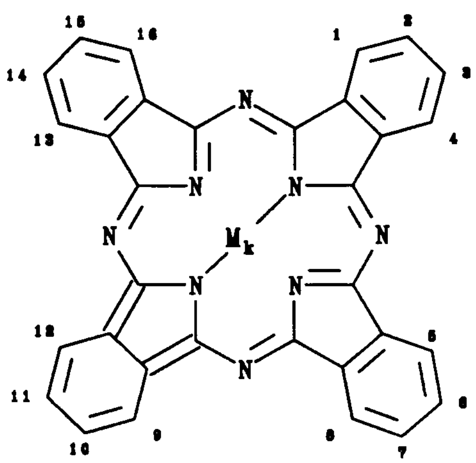

Formula (2)

wherein :

M is a metal atom, a chloro-metal group, an oxy-metal group or hydrogen ;
k is inverse of $\frac{1}{2}$ valency of M
R is an aryl, heteroaryl, cycloalkyl or substituted alkyl radical ;
$R^1$ is an aryl or heteroaryl radical ;
X is a halogen or H ;
a is an integer from 3 to 15 ;
b is an integer from 1 to 13 ;
a+b is an integer from 9 to 16 ; and
d is an integer from 0 to 7 ;

wherein the total of a, b and d is 16 and the groups or atoms O-R, $S\text{-}R^1$ and X are attached to the peripheral carbon atoms numbered 1 to 16 in Formula (2).

EP 0 484 018 A2

This specification describes an invention which relates to certain poly-substituted phthalocyanine compounds which have their major absorbance in the near infra-red region of the electro-magnetic spectrum e.g. from 680 to 800nm and to methods of preparing such compounds.

According to the present invention there are provided phthalocyanine compounds of the Formula (1):

$$M_k\,Pc\,(O\text{-}R)_a\,(S\text{-}R^1)_b\,X_d \quad \text{Formula (1)}$$

wherein:

$M_kPc$ is a phthalocyanine nucleus of the Formula (2):

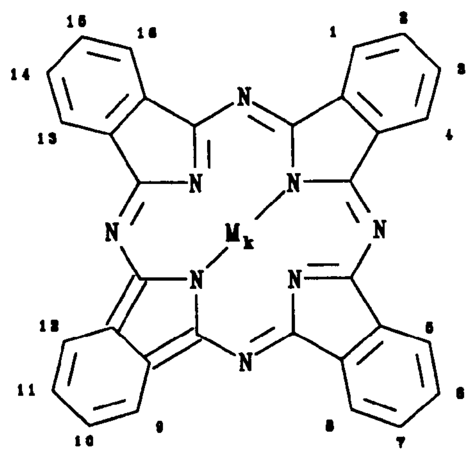

Formula (2)

wherein:

M is a metal atom, a chloro-metal group, an oxy-metal group or hydrogen;
k is inverse of $\frac{1}{2}$ valency of M
R is an aryl, heteroaryl, cycloalkyl or substituted alkyl radical;
$R^1$ is an aryl or heteroaryl radical;
X is a halogen or H;
a is an integer from 3 to 15;
b is an integer from 1 to 13;
a+b is an integer from 9 to 16; and
d is an integer from 0 to 7;

wherein the total of a, b and d is 16 and the groups or atoms O-R, S-$R^1$ and X are attached to the peripheral carbon atoms numbered 1 to 16 in Formula (2).

The phthalocyanines of Formula (1) of particular interest are those which have a maximum absorbance peak ($\lambda$ max) from 680 to 800nm, preferably in the region from 700 to 770nm and especially in the region from 720 to 750nm and which have good solubility (up to 10%) in organic liquids.

It is preferred that the solubility of the phthalocyanines of Formula (1) in organic liquids is at least 3%. Preferred organic liquids are selected from aliphatic and aromatic hydrocarbons, ethers, ketones, chlorinated aliphatic and aromatic hydrocarbons, amides and substituted amides. Specific examples of suitable organic liquids are tetrahydrofuran (THF), cyclohexanone, chloroform, toluene, dichloromethane and dimethylformamide (DMF).

Where the radicals denoted by R and $R^1$ in Formula (1) are aryl or heteroaryl each is optionally substituted. It is preferred that R and $R^1$ are each independently selected from mono- or bi-cyclic aryl and heteroaryl radicals. Examples of suitable aromatic and heteroaryl radicals are phenyl, naphthyl especially naphth-2-yl, pyridyl, quinolinyl, thienyl, furanyl, pyrimidyl, thiazolyl and benzothiazolyl each of which may be optionally substituted. Preferred substituents in the aryl and heteroaryl radicals are selected from $C_{1-20}$-alkyl, especially $C_{1-4}$-alkyl; $C_{1-20}$-alkoxy, especially $C_{1-4}$-alkoxy; $C_{2-20}$-alkenyl, especially $C_{2-4}$-alkenyl; -S-$C_{1-20}$-alkyl, especially -S-$C_{1-4}$-alkyl; -$OC_{1-20}$-alkoxy, especially -$OC_{1-4}$-alkoxy; $C_{1-4}$-hydroxyalkoxy; aryl, especially phenyl; $C_{1-4}$-alkylaryl, especially benzyl; -S-aryl, especially -S-phenyl; halogen, especially fluoro, chloro and bromo; -CN; -$NO_2$; -$CF_3$; -$COR^2$, -$COOR^2$, -$CONR^2R^3$, -$SO_2R^2$, -$SO_2NR^2R^3$, -$NR^2R^3$ and -$OR^2$ in which $R^2$ is selected from -H; alkyl, especially $C_{1-4}$-alkyl, aryl, especially phenyl and $C_{1-4}$-alkylaryl, especially benzyl and $R^3$ is independently selected

from any of the groups defined for $R^2$ and -$COC_{1-4}$-alkyl especially acetyl.

Where the radical represented by $R^1$ is cycloalkyl, it is preferably $C_{4-8}$-cycloalkyl, more preferably cyclohexyl. Where the radical represented by $R^1$ is substituted alkyl, it is preferably $C_{1-4}$-alkyl substituted by phenyl, more preferably benzyl.

It is preferred that each X is a halogen. The halogens denoted by X in Formula (1) are independently selected from fluoro, chloro, bromo and iodo, preferably from chloro and bromo, but more especially are all chloro.

In the phthalocyanines of Formula (1) it is preferred that a is an integer from 4 to 15; it is preferred that b is an integer from 1 to 11; it is preferred that d is an integer from 0 to 4. When the number of O-R groups falls below 8, the remaining peripheral carbon atoms carry S-$R^1$ groups or a mix of S-$R^1$ groups and X groups, in order to maintain the wavelength of maximum absorbance peak in the preferred ranges. When R or $R^1$ is a bicyclic aromatic group, such as naphthyl, the maximum absorbance peak of the phthalocyanine is generally at a longer wavelength than when R or $R^1$ is monocyclic aryl. It is preferred that when a is less than or equal to 10 and $R^1$ is a monocyclic aromatic group, then b is less than or equal to (14-a) and d is greater than 2. It is also preferred that when a is less than or equal to 10 and $R^1$ is a bicyclic aromatic group then b is less than or equal to (13-a) and that d is greater than 3.

The phthalocyanine nucleus may be metal free or it may be complexed with a metal, halo-metal or oxy-metal derivative i.e. it may carry two hydrogen atoms at the centre of the nucleus and it may carry one or two metal atoms, halo-metal groups or oxy-metal groups complexed within the centre of the nucleus. Suitable metals, halo-metals and oxy-metals are those of Groups IA, IIA, IIIB, IVB, 1st, 2nd and 3rd transition metal ions and the lanthanide series of the Periodic Table. Examples of suitable metals, halo-metals and oxy-metals are selected from copper, lead, cobalt, nickel, manganese, iron, zinc, magnesium, aluminium, calcium, palladium, vanadyl and especially copper.

Preferred compounds of Formula (1) are those in which M is Cu, R is phenyl, $R^1$ is 4-methylphenyl, naphth-2-yl or benzyl, each X is chloro, a is 7, 8 or 9, b is 2, 3 or 4 and d is 4.

The phthalocyanines of Formula (1) can be obtained by a number of methods:

(a) by reaction at elevated temperatures of a compound of the Formula (3),

$$M_kPc(OR)_{16} \quad \text{Formula (3)}$$

in which M, Pc and R are as described above, with a compound of Formula (4),

$$H - S - R^1 \quad \text{Formula (4)}$$

in which $R^1$ is as defined above in the presence of a suitable base and in a polar nitrogen and/or oxygen containing compound;

(b) by reaction at elevated temperatures of a compound of the Formula (5),

$$M_kPc(O - R)_a X_d \quad \text{Formula (5)}$$

in which M, Pc, R, X, a and d are as described above, provided at least (a-8)X's are halogen, preferably chloro, with a compound of Formula (4), in the presence of a suitable base and in a polar nitrogen and/or oxygen containing compound;

(c) by reaction at elevated temperatures of a compound of Formula (6),

$$M_kPc\ X_{15/16} \quad \text{Formula (6)}$$

in which M, Pc and X are as described above, provided at least eight Xs are halogen, preferably chloro, with a compound of Formula (7),

$$R - O - H \quad \text{Formula (7)}$$

in which R is as described above in the presence of a suitable base and in a polar nitrogen and/or oxygen containing organic compound; and then with a compound of Formula (4) in the presence of a base and in a polar nitrogen and/or oxygen containing compound.

In the reaction of type (a) above one or more of the O-R groups are replaced by S-$R^1$ groups, the number of groups replaced depending on the reaction conditions used. Generally the higher the temperature, the higher the relative proportions of thiol, $R^1$-SH, to phthalocyanine, $M_kPc(OR)_{16}$, employed and the longer the reaction time, the greater will be the extent of replacement.

In the reaction of type (c) a compound of Formula (6) may be reacted with a mixture of compounds of Formula (7) and then with a mixture of compounds of Formula (4) to form a compound of Formula (2) with a number of different R groups and a number of different $R^1$ groups.

In the above reactions it is preferred that the elevated temperature is from 80°C to 300°C, more preferably from 100°C to 240°C and especially from 110°C to 200°C.

Suitable bases are selected from alkali metal hydroxides, alkaline earth metal hydroxides and alkali metal carbonates. It is preferred that the base is lithium, sodium or potassium hydroxide, it is especially preferred that the base is potassium hydroxide.

The polar nitrogen and/or oxygen containing organic compound, which may or may not be a liquid at ambient temperature and which may only partially dissolve the reactants, preferably has a boiling point from 80°C to 300°C, more preferably from 150°C to 200°C. The polar nitrogen and/or oxygen containing organic compound is preferably inert or may act to catalyse the reaction. It is preferred that the polar nitrogen and/or oxygen containing organic compound is selected from N-methyl-2-pyrrolidone, dimethylformamide, methylcyclohexanol, octanol, benzyl alcohol, nitrobenzene and quinoline. It is especially preferred that in reactions of type (a) and (b) above that the polar nitrogen and/or oxygen containing compound is dimethylformamide or N-methyl-2-pyrrolidone and in reactions of type (c) above that the polar nitrogen and/or oxygen containing compound is N-methyl-2-pyrrolidone.

In reactions of type (b) above one or more of the O-R groups or one or more of the X groups or some combination of O-R or X groups may be replaced by $S-R^1$ groups, the number and type of group replaced depends on the reaction conditions used.

In reactions of type (c) above one or more X groups are firstly replaced by O-R groups and secondly one or more X groups or one or more O-R groups are replaced by $S-R^1$ groups, the number replaced depends on the reaction conditions used.

In reactions of types (a) and (b) the compounds of Formula (3) and Formula (5) respectively are reacted with from 2 to 50 equivalents of a compound of Formula (4), conveniently preferably from 5 to 40 equivalents, more preferably from 5 to 25 equivalents and especially from 5 to 16 equivalents.

In reactions of type (c) the compound of Formula (6) is conveniently firstly reacted with from 2 to 50 equivalents of a compound of Formula (7), preferably from 10 to 40 equivalents, more preferably from 15 to 35 equivalents and secondly with from 5 to 50 equivalents of a compound of Formula (4), preferably from 5 to 30 equivalents and more preferably from 5 to 20 equivalents.

In reactions of types (a), (b) and (c) the base to thiol, or base to phenol or base to phenol plus thiol ratios are preferably from 0.5:1 to 1.5:1.

At the end of each of the reaction types (a) to (c) above the reaction medium may be removed, for example, by distillation, optionally at a reduced pressure, and the product may be conveniently precipitated by adding a further liquid, such as methylated spirits (74 OP), which does not or only partially dissolves the product.

The product may be purified by any convenient means for example by reslurrying in boiling methylated spirits (74 OP) or by column or preparative chromatography.

The phthalocyanine compounds of Formulae (3) and (5) may be conveniently prepared by firstly reacting a tetrahalo-1,2-dicyano-benzene with an organic hydroxy compound whereby one or more of the halo groups are replaced by organic oxy groups and secondly reacting the 1,2-dicyanobenzene derivative with an appropriate metal or metal salt in an inert organic liquid at an elevated temperature. Details of these preparations are more fully described in UK Patent No.1489394 and in German Patent No.2455675. The phthalocyanine compound of Formula (6) in which M is Cu and X is $Cl_{14}Br$ is C.I. Disperse Green 7 and is commercially available from ICI Specialties as VYNAMON Green 2GFW.

Different metals may be introduced into the phthalocyanine by the method disclosed in UK Patent No.1489394 by replacing the copper II chloride with other metals or suitable salts of the appropriate metal. Examples of suitable metals or metal salts in addition to copper chloride include zinc chloride, magnesium chloride, nickel chloride, cobalt chloride, manganese acetate, silicon chloride, lead acetate, iron chloride, germanium chloride, indium bromide, calcium, calcium acetate, palladium chloride, gallanyl chloride and vanadyl chloride.

The phthalocyanine compounds of the present invention are useful for absorbing electro-magnetic radiation from for example a laser source and may be used to coat the optical data storage disks used in high capacity computer data storage systems. In addition these phthalocyanine compounds can be used in security applications such as in printing currency or cheques.

The invention is further illustrated by the following examples in which all parts and percentages are by weight unless otherwise indicated. Where the number of substituents on the phthalocyanine rings of the exemplified compounds is less than 16 the remaining peripheral carbon atoms are unsubstituted i.e. they carry a hydrogen.

## Example 1

### Preparation of octaphenoxy-octa(4-methylphenylthio)copper phthalocyanine

Potassium hydroxide (2.74 parts) and 4-methylthiophenol 6.06 parts) were stirred in dimethylformamide (50 parts) at 120°C for 20 minutes before adding hexadecaphenoxy copper phthalocyanine (10.0 parts) and stirring the reaction mixture at 120°C for a further 16 hours.

The reaction mixture was poured into methylated spirits (74 OP, 300 parts) and the precipitated solid was filtered off. The solid was washed with water (50 parts) and methylated spirits (74 OP, 50 parts) before washing with hot, methylated spirits (74 OP, 50 parts). Octaphenoxy octa(4-methylphenylthio) copper phthalocyanine (7.35 parts) was obtained as a black solid, m.p. 160-165°C.

Example 2

Preparation of decaphenoxy hexa(2-naphthylthio) copper phthalocyanine

The procedure for Example 1 was followed except that 2-thionaphthol (7.82 parts) was used in place of the 4-methyl-thiophenol. The solvent washed product was further purified by column chromatography by passing a solution of the product in chloroform through a silica column. Decaphenoxy hexa(2-naphthylthio) copper phthalocyanine (9.95 parts) was obtained as a black solid, m.p. 145-150°C.

Example 3

Preparation of dodecaphenoxy tetra(4-hydroxyphenylthio) copper phthalocyanine

The procedure for Example 1 was followed except that 4-hydroxythiophenol (6.2 parts) was used in place of the 4-methyl-thiophenol and the reaction mixture was stirred at 120°C for 2 hours

Dodecaphenoxy tetra(4-hydroxyphenylthio) copper phthalocyanine was obtained as a green solid (3.6 parts), m.p. >250°C.

Example 4

Preparation of pentadecaphenoxy mono(4-hydroxyphenylthio) copper phthalocyanine

The procedure for Example 1 was followed except that the reaction mixture was stirred at 120°C for 20 minutes.

Pentadecaphenoxy(4-hydroxyphenylthio) copper phthalocyanine was obtained as a green solid (4.0 parts), m.p. >250°C.

Example 5

Preparation of octa(2-naphthoxy)octa(4-hydroxyphenylthio) copper phthalocyanine

(i) Preparation of 1,2-dicyano-3,4,5,6-tetra(2-naphthoxy)benzene

1,2-Dicyano-3,4,5,6-tetrachlorobenzene (30.5 parts), potassium carbonate (62.8 parts) and 2-naphthol (98.1 parts) were stirred in dimethylformamide (140 parts) at 70°C for 3 hours. The mixture was poured into water (300 parts) and extracted with chloroform (3 x 300 parts). The combined chloroform extracts were washed with dilute aqueous sodium hydroxide solution (500 parts) and then with water (500 parts). The chloroform was dried over anhydrous magnesium sulphate before evaporating under reduced pressure to leave a brown liquid which crystallised on adding butan-1-ol, cooling and standing for 2 hours. The crystallised solid was filtered, washed with butan-1-ol until the filtrates were colourless. The solid was dried to give 1,2-dicyano-3,4,5,6-tetra(2-naphthoxy)benzene (40.6 parts) m.p. 188-190°C.

(ii) Preparation of hexadeca(2-naphthoxy) copper phthalocyanine

1,2-Dicyano-3,4,5,6-tetra(2-naphthoxy)benzene (40.6 parts), copper (II) chloride (2.35 parts) and urea (1.05 parts) were stirred in nitrobenzene (82 parts) at 180°C for 2 hours. The hot reaction mixture was poured into methylated spirits (74 OP, 1000 parts) to precipitate a green solid. The solid was filtered off and washed with methylated spirits (74 OP) until the filtrates were colourless. The solid was then slurried in hydrochloric acid solution (2N, 500 parts) at 20°C for 30 minutes before filtering and washing with ammonia solution (20%, 500 parts), washing with water until alkali free and washing with methylated spirits (74 OP). The solid was dried to give hexadeca-(2-naphthoxy) copper phthalocyanine (34.4 parts), m.p. 150-155°C.

(iii) Preparation of octa(2-naphthoxy) octa(4-hydroxyphenylthio) copper phthalocyanine

The procedure for Example 1 was followed except that hexadeca(2-naphthoxy) copper phthalocyanine (14.0 parts) was used in place of the hexadeca(phenoxy) copper phthalocyanine and 4-hydroxythiophenol (6.2 parts) was used in place of 4-methylthiophenol. Octa(2-naphthoxy)octa(4-hydroxyphenylthio) copper phthalocyanine (5.7 parts) was obtained as a black solid, m.p. >250°C.

Example 6

Preparation of hexaphenoxy nona(4-methoxyphenylthio) chloro copper phthalocyanine

Potassium hydroxide (0.56 parts) and 4-methoxythiophenol (1.41 parts) were stirred in dimethylformamide (25 parts) under nitrogen at 120°C for 15 minutes before adding octaphenoxy octachloro copper phthalocyanine (1.9 parts) and stirring the reaction mixture at 120°C for 3 hours.

The reaction mixture was screened through filter aid and the dimethylformamide was removed by distillation under reduced pressure until near dryness. Methylated spirits (74 OP) was added to precipitate a solid which was filtered off and dried. Hexaphenoxy nona(4-methoxyphenylthio)chloro copper phthalocyanine (3.1 parts) was obtained, m.p. 90-95°C.

Example 7

Preparation of triphenoxy trideca(4-methoxyphenylthio) copper phthalocyanine

Potassium hydroxide (0.28 parts) and 4-methoxythiophenol (0.7 parts) were stirred in dimethylformamide (25 parts) under nitrogen and heated to 120°C before adding hexaphenoxy nona(4-methoxyphenylthio) chloro copper phthalocyanine (3.1 parts) and stirring the reaction mixture at 120°C for a further 2 hours.

The reaction mixture was added to methylated spirits (74 OP) to precipitate a solid which was filtered, reslurried in methylated spirits (74 OP), reslurried in ethanol, filtered and dried. Triphenoxy trideca(4-methoxyphenylthio) copper phthalocyanine (1.7 parts) was obtained as a brown solid, m.p. 90-95°C.

Example 8

Preparation of tetraphenoxy deca(6-methoxy-2-naphthylthio) dichloro copper phthalocyanine

The procedure for Example 6 was followed except that 6-methoxy-2-thionaphthol (1.9 parts) was used in place of 4-methoxythiophenol.

Tetraphenoxy deca(6-methoxy-2-naphthylthio)dichloro copper phthalocyanine (2.4 parts) was obtained as a brown solid, m.p. 205-210°C.

Example 9

Preparation of hexaphenoxy hepta(4-methylphenylthio) trichloro copper phthalocyanine

The procedure for Example 6 was followed except that 4-methylthiophenol (1.2 parts) was used in place of 4-methoxythiophenol.

Hexaphenoxy hepta(4-methylphenylthio) trichloro copper phthalocyanine (0.9 parts), m.p.150°C was obtained.

Example 10

Preparation of tetraphenoxy nona(4-hydroxyphenylthio) trichloro copper phthalocyanine

The procedure for Example 6 was followed except that 4-hydroxythiophenol (2.2 parts) was used in place of 4-methoxythiophenol.

Tetraphenoxy nona(4-hydroxyphenylthio) trichloro copper phthalocyanine (2.7 parts), m.p.>250°C was obtained.

Example 11

Preparation of nonaphenoxy di(4-methylphenylthio) tetrachloro copper phthalocyanine

Potassium hydroxide (2.9 parts) and phenol (5.6 parts) were dissolved in N-methylpyrrolidone (30 parts) and heated to 180°C before adding C.I. Pigment Green 7 (2.3 parts) and stirred at 180°C for 1 hour. The reaction mixture was allowed to cool to 120°C. 4-Methylthiophenol (1.5 parts) and potassium hydroxide (0.7 parts) were dissolved in N-methylpyrrolidone (15 parts) at 120°C before adding the reaction mixture and stirring at 120°C for 15 minutes. The product was precipitated by adding methylated spirits (74 OP) to the reaction mixture, filtered off and washed with methylated spirits (74 OP). The product was dissolved in dimethylformamide and filtered through filter aid. The dimethylformamide was removed by distillation under reduced pressure. The product was precipited with methylated spirits (74 OP), filtered off and reslurried three times in boiling methylated spirits (74 OP) and dried to give nonaphenoxy di(4-methylphenylthio)tetrachloro copper phthalocyanine (2.2 parts), m.p. 200-210°C.

Example 12

Preparation of heptaphenoxy tetra(2-naphthylthio)tetrachloro copper phthalocyanine

The procedure for Example 11 was followed except that 2-thionaphthol (1.9 parts) was used in place of 4-methylthiophenol.

Heptaphenoxy tetra(2-naphthylthio) tetrachloro monohydro copper phthalocyanine (3.3 parts) was obtained, m.p. 140-142°C.

Example 13

Preparation of tetra(4-methoxyphenoxy) dodeca(4-methylphenylthio) copper phthalocyanine

(i) Preparation of 1,2-dicyano-3,5,6-trichloro-4-(4-methoxyphenoxy) benzene

Potassium hydroxide (2.1 parts) in water (4.0 parts) was added dropwise to a stirred solution of 1,2-dicyano-3,4,5,6-tetrachlorobenzene (5 parts) and phenol (2.3 parts) in acetone (20 parts) at 0°C. The reaction mixture was warmed to 50°C and stirred for a further 2 hours. The reaction mixture was poured into water (100 parts) and extracted with dichloromethane (3 x 150 parts). The combined dichloromethane extracts were washed with water (100 parts) and dried over anhydrous magnesium sulphate. Removal of the dichloromethane by distillation under reduced pressure gave a buff coloured residue. The residue was crystallised from butan-1-ol to give 1,2-dicyano-3,5,6-trichloro-(4-(4-methoxyphenoxy)benzene (2.8 parts) m.p. 140-142°C.

(ii) Preparation of tetra(4-methoxyphenoxy) dodecachloro copper phthalocyanine

1,2-Dicyano-3,5,6-trichloro-4-(4-methoxyphenoxy)benzene (5.0 parts), copper (II) chloride (0.6 parts) and urea (0.3 parts) were stirred in nitrobenzene (20 parts) and heated at 180°C for 2 hours. The reaction mixture was poured into ethanol (200 parts) to precipitate a green solid. This solid was washed with ethanol, acetone, hydrochloric acid solution (10%, 50 parts), ammonia solution (10%, 50 parts), water and finally acetone before drying in air. Tetra-(4-methoxyphenoxy) dodecachloro copper phthalocyanine (3.9 parts), was obtained as a green solid, m.p.>250°C.

(iii) Preparation of tetra(4-methoxyphenoxy) dodeca(4-methylphenylthio) copper phthalocyanine

The procedure for Example 6 was followed except that 4-methylthiophenol (2.5 parts) was used in place of 4-methoxythiophenol, 1.2 parts of potassium hydroxide was used in place of 0.56 parts, and tetra(4-methoxyphenoxy)dodecachloro copper phthalocyanine (2.0 parts) was used in place of octaphenoxy octachloro copper phthalocyanine.

Tetra (4-methoxyphenoxy) dodeca(4-methylphenylthio) copper phthalocyanine (3.1 parts) was obtained as a brown solid, m.p. 125-130°C.

Example 14

Preparation of tetra(4-methoxyphenoxy) dodeca(2-naphthylthio) copper phthalocyanine

The procedure for Example 6 was followed except that 2-thionaphthol (3.2 parts) was used in place of 4-methylthiophenol and tetra(4-methoxyphenoxy)dodecachloro copper phthalocyanine (1.95 parts) was used in place of octaphenoxy octachloro copper phthalocyanine.

Tetra (4-methoxyphenoxy) dodeca(2-naphthylthio) copper phthalocyanine was obtained, m.p. 120-125°C.

Example 15

Preparation of heptaphenoxy tri(4-hydroxyphenylthio)penta-chloro copper phthalocyanine

The procedure of Example 11 was followed except that 2.2 parts instead of 2.9 parts of potassium hydroxide and 2.5 parts of 4-hydroxythiophenol instead of the 4-methylthiophenol were used. Heptaphenoxytri(4-hydroxyphenylthio)penta-chloro copper phthalocyanine (2.9 parts, 82%), m.p.145-150°C was obtained.

Example 16

Preparation of hexaphenoxy hepta(4-chlorophenylthio)dichloro copper phthalocyanine

The procedure of Example 15 was followed except 2.9 parts of 4-chlorothiophenol was used in place of the 4-hydroxythiophenol. Hexaphenoxy hepta(4-chlorophenylthio)dichloro copper phthalocyanine (4.3 parts, 98%), m.p.97-100°C was obtained.

Example 17

Preparation of hexaphenoxy hexaphenylthio trichloro copper phthalocyanine

The procedure of Example 11 was followed except that 9.5 parts instead of 2.9 parts of potassium hydroxide, 18.35 parts instead of 5.6 parts of phenol, 135 parts instead of 30 parts of N-methylpyrrolidone, 7.6 parts instead of 2.3 parts of C.I. Pigment Green 7 and 7.2 parts of thiophenol instead of the 4-methylthiophenol were used. Hexaphenoxy hexaphenylthio trichloro copper phthalocyanine (7.2 parts, 59%), m.p.198-200°C was obtained.

Example 18

Preparation of hexaphenoxy hexa(4-acetylaminophenylthio)trichloro copper phthalocyanine

The procedure of Example 15 was followed except that 4-acetylaminothiophenol (3.3 parts) instead of the 4-hydroxythiophenol was used. Hexaphenoxy hexa(4-acetylaminophenylthio)trichloro copper phthalocyanine (4.6 parts, 98%), m.p.105-107°C was obtained.

Example 19

Preparation of octaphenoxy tribenzylthio tetrachloro copper phthalocyanine

The procedure of Example 15 was followed except that 1.48 parts of benzylmercaptan was used in place of the 4-hydroxythiophenol. Octaphenoxy tribenzylthio tetrachloro copper phthalocyanine (1.5 parts, 41%), m.p.198-202°C was obtained.

Example 20

Preparation of heptaphenoxy tricyclohexyl pentachloro copper phthalocyanine

The procedure of Example 15 was followed except that 3.0 parts of cyclohexylthiol was used in place of 4-hydroxythiophenol. Heptaphenoxy tricyclohexyl pentachloro copper phthalocyanine (2.8 parts, 54%), m.p.232-234°C was obtained.

The ultraviolet, visible and near infra red spectra were measured for the products of the above Examples in solvents such as dichloromethane, chloroform and dimethylformamide (DMF) and the λ max values in the range 680 - 800nm are shown in Table 1.

Table 1

| Example | λ max (nm) |
|---|---|
| 1 | 753 ($CHCl_3$) |
| 2 | 759 " |
| 3 | 739 " |
| 4 | 737 " |
| 5 | 747 (DMF) |
| 6 | 750 ($CHCl_3$) |
| 7 | 768 " |
| 8 | 761 " |
| 9 | 744 " |
| 10 | 732 (DMF) |
| 11 | 728 " |
| 12 | 736 ($CHCl_3$), 731 ($CH_2Cl_2$) |
| 13 | 763 ($CHCl_3$) |
| 14 | 770 " |
| 15 | 719 " |
| 16 | 746 " |
| 17 | 735 " |
| 18 | 726 " |
| 19 | 723 " |
| 20 | 722 " |

## Claims

**1.** A phthalocyanine compound of the Formula (1):

$$M_k Pc (O\text{-}R)_a (S\text{-}R^1)_b X_d \quad \text{Formula (1)}$$

wherein:

$M_kPc$ is a phthalocyanine nucleus of the Formula (2):

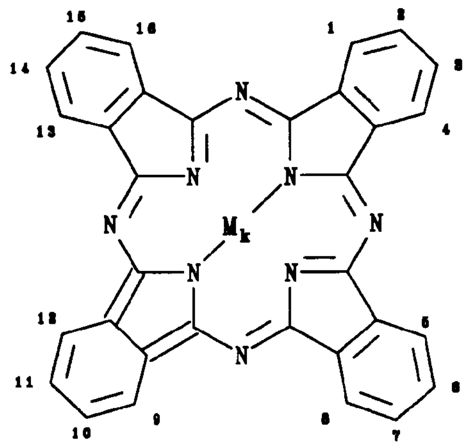

Formula (2)

wherein:

M is a metal atom, a chloro-metal group, an oxy-metal group or hydrogen;
k is inverse of $\frac{1}{2}$ valency of M
R is an aryl, heteroaryl, cycloalkyl or substituted alkyl radical;
$R^1$ is an aryl or heteroaryl radical;
X is a halogen or H;
a is an integer from 3 to 15;
b is an integer from 1 to 13;
a+b is an integer from 9 to 16; and
d is an integer from 0 to 7;

wherein the total of a, b and d is 16 and the groups or atoms O-R, S-$R^1$ and X are attached to the peripheral carbon atoms numbered 1 to 16 in Formula (2).

**2.** A phthalocyanine compound according to Claim 1 wherein R is a mono- or bi-cyclic aryl, heteroaryl, cycloalkyl or substituted alkyl radical and $R^1$ is a mono- or bi-cyclic aryl or heteroaryl.

**3.** A phthalocyanine compound of the Formula (1):

$$M_k\,Pc\,(O\text{-}R)_a\,(S\text{-}R^1)_b\,X_d \quad \text{Formula (1)}$$

wherein:

R is phenyl;
$R^1$ is 4-methylphenyl, naphth-2-yl or benzyl;

each X is chloro;

a is 7, 8 or 9;
b is 2, 3 or 4; and
c is 4.

**4.** A phthalocyanine compound according to any one of Claims 1 to 3 having a maximum absorbance in the region from 680 to 800 nm.